# EUROPEAN PATENT SPECIFICATION

(11) **EP 2 876 370 B1**
(45) Date of publication and mention of the grant of the patent: **19.12.2018**
(21) Application number: 13819904.7
(22) Date of filing: 26.06.2013
(51) Int. Cl.: F23G 5/027, F23C 10/18, F23C 99/00, F23G 5/00, F23G 5/14, F23G 5/16, F23G 5/20, F23G 5/30, F23G 5/44, F23G 5/50, F23L 7/00

(54) **WASTE PROCESSING METHOD**
ABFALLVERARBEITUNGSVERFAHREN
PROCÉDÉ DE TRAITEMENT DE DÉCHETS

(30) Priority: 20.07.2012 JP 2012161926; 06.02.2013 JP 2013021028
(43) Date of publication of application: 27.05.2015
(73) Proprietor: Ebara Environmental Plant Co., Ltd., Tokyo 144-0042 (JP)
(72) Inventor: ISHIKAWA, Ryuichi, Tokyo 144-0042 (JP); YAMAGUCHI, Shigeru, Tokyo 144-0042 (JP); KIRA, Makoto, Tokyo 144-0042 (JP); NAKAMURA, Yukihiro, Tokyo 144-0042 (JP); IMAMURA, Kohki, Tokyo 144-0042 (JP); IKEDA, Futoshi, Tokyo 144-0042 (JP); KIKUCHI, Kosuke, Tokyo 144-0042 (JP); SATO, Takahide, Tokyo 144-0042 (JP)
(74) Representative: Carstens, Dirk Wilhelm
(86) International application number: PCT/JP2013/067453
(87) International publication number: WO 2014/013849

(56) References cited:
- EP-A2- 0 541 194
- EP-A2- 0 773 406
- EP-A2- 1 508 745
- JP-A- H05 118 523
- JP-A- 2003 090 520
- JP-A- 2003 090 520
- JP-A- 2003 166 706
- JP-A- 2007 127 355
- JP-A- 2007 163 078
- US-A- 4 056 068

## Description

### Technical field

The present invention relates to a method for treating wastes, and more particularly to a method for treating wastes for performing incineration treatment of wastes such as municipal wastes, shredder dust, and waste plastics.

### Background Art

For efficiently and hygienically reducing the volume of wastes such as municipal wastes, shredder dust, and waste plastics, the wastes have been incinerated and treated by an incinerator. Since nitrogen oxides (NOx) are generated by incineration treatment, an exhaust gas discharged from the incinerator contains a comparatively large amount of NOx. NOx is produced by the oxidation of nitrogen compounds in the object to be incinerated (Fuel-NOx) and the oxidation of nitrogen in the air (Thermal-NOx). It is said that Fuel-NOx is mainly occurred in the waste incinerators.

For reducing NOx discharged from waste incinerators, Non-patent document 1, for example, discloses measures for reducing nitrogen oxides contained in exhaust gases from waste disposal facilities. Non-patent document 1 describes such measures as follows:
In order to suppress the amount of NOx generated in an incinerating process, there is an effective method (self-denitration reaction) for decreasing the conversion of nitrogen into NOx and reducing the generated NOx with reducing gases such as NH₃, CO, and hydrocarbon that are generated in a drying process, a pyrolysis process, and the like in the furnace. In such a denitration method, there is low-oxygen combustion in which incineration is performed by reducing combustion air. According to the low-oxygen combustion, the combustion temperature increases to damage the furnace or to produce clinker, and thus it is necessary to lower the temperature of combustion gas. Such methods include a method for spraying water into the furnace (in-furnace water spray method) and a method for returning a combustion exhaust gas whose temperature has been lowered into the furnace (exhaust gas recirculation method). Further, as a method for positively carrying out the self-denitration reaction, there is a two-stage combustion method for mixing a combustion gas with a reducing gas from a drying stoker.

Non-patent document 1 shows that according to the in-fumace water spray method, NOx is greatly reduced from a level of 120 to 150 ppm to an average level of 85.9 ppm by spraying water at a rate of 2.0 t/h to the amount of incineration of 12.5 t/h, and the concentration of oxygen at this time is 6.8 % on average, and there is a possibility that NOx will be further reduced by increasing the amount of sprayed water. According to Non-patent document 1, however, if the amount of sprayed water is too large, the temperature of the furnace is lowered excessively, thus being liable to generate an unburned gas and to lower the combustion velocity, and consequently the furnace wall bricks are damaged, and thus water cannot be sprayed in large quantities.

Further, Non-patent document 1 shows that in the exhaust gas circulation method, the concentration of NOx is reduced by about 30 % to about 84 ppm at an exhaust gas circulation rate of 20 %, but NOx is reduced by a reduction of oxygen concentration, and there is no apparent significant difference by the presence or absence of the exhaust gas circulation.

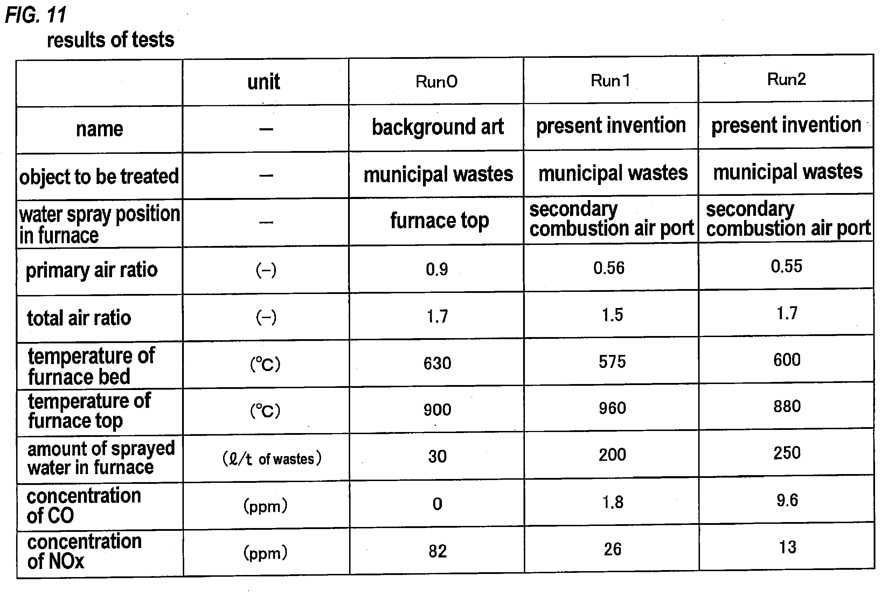

Further, Patent document 1 shows a method for suppressing NOx by spraying water toward the wastes that are combusting on a fire grate of a stoker incinerator, and describes that in FIG. 11(a) of the embodiment, the concentration of NOx is suppressed to 50 ppm on average.

Heretofore, there has been used a catalytic denitration method in which ammonia is blown into an exhaust gas discharged from an incinerator to cause ammonia and NOx to react selectively with each other in the presence of a catalyst, thereby decomposing NOx into water and nitrogen. Since the catalyst is expensive, there has also been used a non-catalytic denitration method in which ammonia is blown into an exhaust gas to decompose NOx without the use of any catalyst. With respect to a non-catalytic denitration method in a fluidized bed, Patent document 2 discloses a method for suppressing the concentration of NOx to a level of 70 ppm or lower by blowing a reducing agent such as urea aqueous solution or ammonia water into a range from a position directly above a fluidized sand-bed to a position directly below a blowing portion of secondary air in a fluidized bed furnace.

Further, Patent document 3 discloses a method for reducing NOx and SOx in a combustion exhaust gas. According to the disclosed method, a coal having a volatile matter content of 10 to 25 percent by mass (wet base) and a coal having a higher volatile matter content are mixed together and the mixed coals are changed into a combustion furnace of a fluidized-bed boiler into which fluidizing air and combustion air are blown at plural locations. For increasing the proportion of the volatile matter content of the coals after they are mixed by not less than five percent by mass with respect to the coals before they are mixed, and combusting the coals, water is added in advance to at least one of fluidizing air and combustion air to be blown into the combustion furnace of the fluidized-bed boiler or water is directly supplied into the combustion furnace of the fluidized-bed boiler, and desulphurization is performed in the combustion furnace of the fluidized-bed boiler, thereby reducing NOx and SOx in the combustion exhaust gas. Patent document 3 describes that the concentration of NOx has been reduced to a level of 50 to 60 ppm in the embodiment.

### Citation List

### Patent Literature

Patent document 1: Japanese laid-Open patent publication No. 10-148319
Patent document 2: Japanese laid-Open patent publication No. 5-332521
Patent document 3: Japanese laid-Open patent publication No. 2009-216353

### Non-patent Literature

Non-patent document 1: Annual Report of Tokyo Metropolitan Research Institute for Environmental Protection, 1988, p. 30 - 36 "On measures for reducing nitrogen oxides contained in an exhaust gas from a waste incineration plant", Sukehisa Tatsuichi, et al.

### Further, reference is made to:

EP 1 508 745 A2, which relates to a refuse incinerator having a mixer gas inlet jet to a gas chamber between a burning bed mass and a secondary air mixer zone to create a further mixing zone;

US 4 056 068 A related to a process for conditioning flue gases in waste material incineration plants with heat utilization. Secondary air is introduced into a combustion chamber above a combustion grate. The flue gases are moistened prior to entering the gas cleaner by water sprayed therein;

EP 0 773 406 A2 related to a method for reducing nitrogen oxide formation and emission during incineration of a waste gas in an air-staged thermal oxidizer. In the method, a natural gas stream is mixed with combustion air and the mixture is ignited with the immediate introduction of liquid water. The resulting mixture is then injected into a first reducing zone which is fuel rich in order to begin the combustion process, but retard the formation of nitrogen oxides. The waste gas exiting the reducing zone is deficient in oxygen due to the fuel rich atmosphere in the first reducing zone and cooler due to the water cooling as it enters the second oxidizing zone. In the second oxidizing zone, additional oxygen in the form of air is injected to complete the combustion process; and EP 0 541 194 A2 related to a method of incinerating wastes while controlling the production of dioxins wherein water vapor or water is sprayed in the main combustion zone of an incinerator.

### Summary of Invention

### Technical Problem

According to the prior art disclosed in the prior art documents including the above Non-patent document 1 and Patent documents 1 through 3, attempts are made to suppress NOx in addition to reducing the air ratio. However, if the air ratio is reduced excessively, CO is produced by incomplete combustion due to lack of oxygen. Therefore, the concentration of NOx cannot be reduced to about 50 ppm at most, and thus it has been difficult to achieve both low-NOx and low-CO at the same time.

According to the above prior art, water spray in the conventionally-known incinerators is nothing more than simple water spray, and has a limited effect on the reduction of NOx.

The present inventors have repeatedly performed operation of a waste incinerator while variously changing an amount of sprayed water and spray position, and have found that an optimized amount of sprayed water and an optimized spray position are only effective to reduce NOx to the same degree as that in the prior art. Therefore, the present inventors have examined amounts of generated NOx under various conditions established for a combustion site where water spray is performed, and have made the present invention accordingly.

In one example, in fluidized bed incinerators, primary combustion of wastes takes place in a fluidized-bed (sand bed), and then remaining secondary combustion takes place in a freeboard. Conventional fluidized bed incinerators have been operated to increase the proportion of primary combustion in the sand bed, thereby providing a heat source for maintaining the temperature of the fluidized-bed. In many fluidized bed incinerators, combustion air is supplied to combust unburned content, which has not yet been combusted in the sand bed, in the freeboard for promoting complete combustion, and water spray is performed to adjust the temperature in the furnace for avoiding a trouble of clinker deposited on the furnace wall. However, the amount of generated NOx has remained essentially unchanged by the amount of sprayed water and the spray position.

The present inventors have found that the concentration of NOx can greatly be reduced to 20 ppm or lower by supplying combustion air and performing water spray when the proportion of primary combustion in the fluidized-bed (sand bed) is reduced to cause primary combustion to take place slowly in the sand bed, and combustible gas is supplied in relatively large quantities to the freeboard to perform secondary combustion in the freeboard. In this case, it has been confirmed that NOx can sufficiently be suppressed even if the total air ratio in secondary combustion is not less than 1.5 and is thus relatively high. Further, the present inventors have found that the concentration of NOx can be reduced to 20 ppm or lower and the concentration of CO can stably be kept at about 10 ppm or lower at an air ratio of about 1.5 to 1.7 by lowering bed temperature to 600 °C or lower to perform primary combustion slowly in the bed.

Based on the above knowledge, the present inventors have discovered that the concentration of NOx can be reduced by setting, not only an amount of sprayed water and spray position but also a combustion site where water spray is performed, to specific conditions, and have made the present invention accordingly.

It is therefore an object of the present invention to provide a method for treating wastes which can achieve reduction of the concentration of NOx and reduction of the concentration of CO simultaneously by a simple method of water spray without installing new facilities such as a denitration catalyst facility and also without using chemicals such as ammonia or aqueous urea solution.

### Solution to Problem

In order to achieve the above object, according to the present invention, there is provided a method for treating wastes by incinerating the wastes with an incinerator as set forth in claim 1. Further embodiments are inter alia disclosed in the dependent claims.

The method inter alia comprises: combusting part of wastes at a primary air ratio ranging from 0.5 to 0.7 to generate a combustible gas; and supplying secondary combustion air to the generated combustible gas and spraying water in the generated combustible gas to perform secondary combustion of the combustible gas in the presence of water.

According to the present invention, in the case where wastes such as municipal wastes, shredder dust, and waste plastics, in which gasification combustion is mainly performed, are incinerated, the wastes are partly combusted at a primary air ratio ranging from 0.5 to 0.7 to generate a combustible gas, and secondary combustion air is supplied and water is sprayed in the secondary combustion to combust the combustible gas in the presence of water, so that the generation of nitrogen oxides (NOx) can be suppressed. The water spray is performed by blowing water together with the secondary combustion air to lower the combustion temperature of the secondary combustion site, and to allow water to coexist in the secondary combustion site, thereby suppressing NOx generation reaction.

In the present invention, the air ratio refers to the ratio of an amount of actually supplied air to a theoretical combustion air amount that is required to combust the wastes.

According to a preferred aspect of the present invention, an amount of sprayed water is 30 to 600 liters per ton of the wastes in wet weight of wastes.

The amount of sprayed water varies depending on the amount of heat generated by the material to be incinerated and the amount of a volatile matter content. According to the present invention, in the case where the amount of sprayed water is in the range of 30 to 600 liters per ton (wet weight) of wastes, as the amount of sprayed water increases, the denitration effect increases.

According to a preferred aspect of the present invention, the incinerator comprises a fluidized bed furnace; and fluidizing air as primary air is supplied in quantities so that an air ratio becomes in the range of 0.5 to 0.7.

In the case where the incinerator comprises a fluidized bed furnace and the fluidizing air is supplied in the above air ratio range, a freeboard as a secondary combustion site can be supplied with an appropriate unburned gas and a reducing substance, so that the NOx generation reaction can be suppressed by the secondary combustion air and the water spray.

According to a preferred aspect of the present invention, the incinerator comprises a fluidized bed furnace; and an amount of fluidizing air supplied to the fluidized bed is differentiated in areas of the fluidized bed to make a fluidizing velocity larger in at least one area than the fluidizing velocity in another area so that a moving-bed where the fluidized sand descends is formed in another area and a fluidized-bed where the fluidized sand ascends is formed in the at least one area, and the wastes are supplied into the moving-bed.

According to the present invention, the wastes are supplied to the moving-bed, and the supplied wastes are taken into the moving-bed and move downwardly together with a fluidized sand. In the moving-bed, the wastes are pyrolyzed to generate a combustible gas and an unburned matter (char). The generated unburned matter (char) is directed together with the fluidized sand toward the fluidized-bed. In the fluidized-bed, part of the unburned matter is combusted to heat the fluidized sand. The fluidized sand has its temperature raised in the fluidized-bed up to a temperature to appropriately pyrolyze the wastes in the moving-bed.

According to the present invention, the temperature of a furnace bed in the fluidized bed furnace is maintained in the range of 550°C to 600°C.

By adjusting the temperature of the furnace bed in the fluidized bed furnace to the above temperature range, a gasification reaction slowly occurs in the fluidized bed, and thus the combustible gas can be stably supplied to the freeboard as the secondary combustion site. Therefore, the NOx generation reaction can be suppressed by the secondary combustion air and the water spray in the secondary combustion site.

According to a preferred aspect of the present invention, the incinerator comprises a stoker furnace; and primary combustion air is supplied to the wastes from below a fire grate in a main combustion zone in the stoker furnace to combust part of the wastes, thereby generating a combustible gas, and secondary combustion air is supplied above the main combustion zone and water is sprayed to perform secondary combustion of the combustible gas under the coexistence of water.

According to the present invention, a stoker furnace is used as the incinerator, and primary combustion air is supplied to the material to be incinerated from below the fire grate in the main combustion zone of the stoker furnace at an air ratio ranging from 0.5 to 0.7 to generate a combustible gas, and secondary combustion air is supplied from a side wall above the main combustion zone and water is sprayed to perform secondary combustion of the combustible gas in the presence of water.

According to a preferred aspect of the present invention, the incinerator has a cylindrical kiln and a secondary combustion chamber provided at an outlet of the kiln; and primary combustion air is supplied into the kiln to combust part of the wastes, thereby generating a combustible gas, and secondary combustion air is supplied to the secondary combustion chamber and water is sprayed to perform secondary combustion of the combustible gas under the coexistence of water.

According to the present invention, the incinerator comprises a kiln furnace, and primary combustion air is supplied into the cylindrical kiln so that an air ratio becomes in the range 0.5 to 0.7 to perform primary combustion, thereby generating a combustible gas, and secondary combustion air is supplied and water is sprayed in the secondary combustion chamber connected to the outlet of the kiln to perform secondary combustion of the combustible gas in the presence of water.

According to a preferred aspect of the present invention, the incinerator comprises a gasification combustion furnace having a primary furnace configured to combust part of the wastes to generate a combustible gas and a secondary furnace configured to perform secondary combustion of the combustible gas; and primary combustion air is supplied to the primary furnace to generate the combustible gas, and secondary combustion air is supplied to the secondary furnace and water is sprayed to perform secondary combustion of the combustible gas under the coexistence of water.

According to the present invention, the incinerator comprises a gasification combustion furnace having a primary furnace and a secondary furnace. Primary combustion air is supplied to the primary furnace at an air ratio ranging from 0.5 to 0.7 to generate a combustible gas, and secondary combustion air is supplied and water is sprayed in the secondary furnace to perform secondary combustion of the combustible gas in the presence of water.

According to a preferred aspect of the present invention, the temperature of the fluidized bed is maintained in the range of 500 to 650°C.

By adjusting the temperature of the fluidized bed to the above temperature range, a gasification reaction slowly occurs in the fluidized bed, and thus the combustible gas can be stably supplied to the freeboard as the secondary combustion site. Therefore, the NOx generation reaction can be suppressed by the secondary combustion air and the water spray in the secondary combustion site.

According to a preferred aspect of the present invention, an amount of fluidizing air supplied to the fluidized bed is differentiated in areas of the fluidized bed to make a fluidizing velocity larger in at least one area than the fluidizing velocity in another area so that a moving-bed where the fluidized sand descends is formed in another area and a fluidized-bed where the fluidized sand ascends is formed in the at least one area, and the wastes are supplied into the moving-bed.

According to the present invention, the wastes are supplied to the moving-bed, and the supplied wastes are taken into the moving-bed and moves downwardly together with a fluidized sand. In the moving-bed, the wastes are pyrolyzed to generate a combustible gas and an unburned matter (char). The generated unburned matter (char) is directed together with the fluidized sand toward the fluidized-bed. In the fluidized-bed, part of the unburned matter is combusted to heat the fluidized sand. The fluidized sand has its temperature raised in the fluidized-bed up to a temperature to appropriately pyrolyze the wastes in the moving-bed.

### Advantages of the invention:

According to the present invention, the concentration of NOx can be reduced to 20 ppm or lower and the concentration of CO can be reduced to 10 ppm or lower by a simple method of water spray without installing new facilities such as a denitration catalyst facility and also without using chemicals such as ammonia. Consequently, low-NOx and low-CO can simultaneously be achieved.

According to the present invention, the following adventitious effect can be further obtained:
(1) Since no denitration catalyst is required and denitration can be achieved only by water spray, there is no need for the installation of a chemical storing facility and a chemical adding device for a denitration chemical such as ammonia or aqueous urea solution. Therefore, the facility required becomes simple and inexpensive.
(2) A denitration catalyst is installed downstream of an exhaust gas dust removal facility. In order to increase the catalyst activity and suppress the generation of acid ammonium sulfate as a poisoning component, the exhaust gas from which dust has been removed is reheated by steam or the like to a temperature (about 210°C) at which no acid ammonium sulfate is produced, and then the exhaust gas is introduced into the catalyst. Since there is no need to use a catalyst according to the present invention, a reasonable system in which the temperature is lowered successively after the incinerator in the facility flow can be established. Thus, it is not necessary to consume extra steam, and the maximization of heat recovery and the high-level treatment of the exhaust gas can simultaneously be accomplished.
(3) Since heat recovery is maximized and the consumption of extra steam for reheating the exhaust gas or other purposes is not necessary, the generation of electric power is maximized, and hence the income from electric power selling is maximized. The cost of chemicals to be used is reduced, and the expenses required for catalyst replacement are also reduced. As a result, the cost of operation and maintenance of the facility can be greatly reduced.
(4) Since the present invention can be implemented simply by adjusting combustion air and adding a water spray device also in the existing incinerator, significant improvement in function in the existing facility can be performed inexpensively.

### Brief Description of Drawings

FIG. 1 is a vertical cross-sectional view showing a fluidized-bed incinerator as a waste incinerator used for the method according to an embodiment of the present invention;
FIG. 2 is a cross-sectional view taken along line II - II of FIG. 1;
FIG. 3 is a vertical cross-sectional view showing a fluidized-bed incinerator according to another embodiment of the present invention;
FIG. 4 is a cross-sectional view taken along line IV - IV of FIG. 3;
FIG. 5 is a vertical cross-sectional view showing a stoker furnace as a waste incinerator according to an embodiment of the present invention;
FIG. 6 is a cross-sectional view taken along line VI - VI of FIG. 5;
FIG. 7 is a vertical cross-sectional view showing a kiln stoker furnace as a waste incinerator according to an embodiment of the present invention;
FIG. 8 is a vertical cross-sectional view showing a gasification combustion furnace as a waste incinerator according to an embodiment of the present invention;
FIG. 9A is a block diagram showing a processing flow of an exhaust gas discharged from an incinerator, and showing a conventional processing flow;
FIG. 9B is a block diagram showing a processing flow of an exhaust gas discharged from an incinerator, and showing a processing flow of the present invention;
FIG. 10 shows a processing flow of facilities on which tests were conducted;
FIG. 11 is a table showing the results of tests conducted on the fluidized-bed incinerator shown in FIG. 3;
FIG. 12A is a table showing the results of tests conducted on the fluidized-bed incinerator shown in FIG. 3;
FIG. 12B is a table showing the results of tests conducted on the fluidized-bed incinerator shown in FIG. 3;
FIG. 13 is a diagram showing the relationship between total air ratios and the concentrations of NOx;
FIG. 14 is a diagram showing the relationship between the amount of sprayed water in the furnace and the concentrations of NOx; and
FIG. 15 is a diagram showing the relationship between total air ratios and the concentrations of CO.

### Description of Embodiments

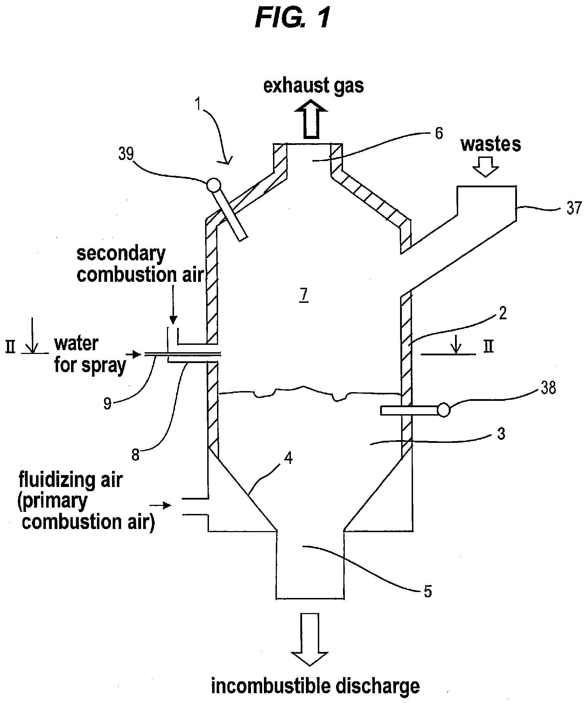

A method for treating wastes according to embodiments of the present invention will be described below with reference to FIGS. 1 through 15. In FIGS. 1 through 15, identical or corresponding components are denoted by identical reference numerals, and will not be described in duplication.

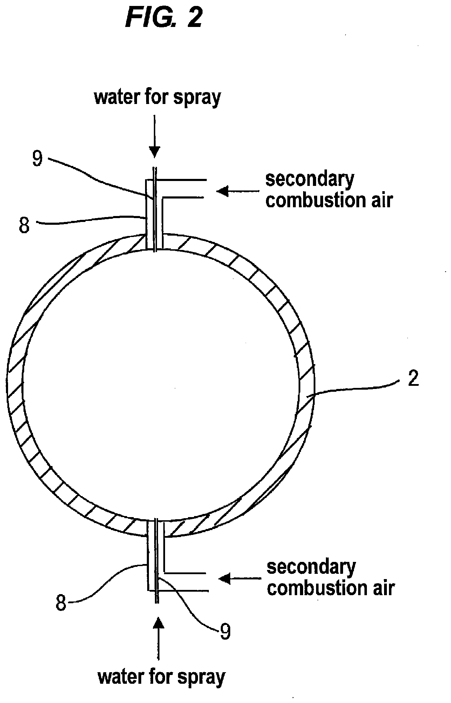

FIG. 1 is a vertical cross-sectional view showing a fluidized bed incinerator according to an embodiment of a waste incinerator of the present invention. FIG. 2 is a cross-sectional view taken along line II - II of FIG. 1. As shown in FIGS. 1 and 2, a fluidized bed incinerator 1 includes a furnace body 2 for treating wastes, a fluidized bed 3 for pyrolyzing wastes introduced therein and combusting part of the wastes, and a base plate 4 for supporting the fluidized bed 3. The fluidized bed 3 comprises a sand bed which is formed by an accumulation of a fluidized medium composed typically of sand such as silica sand. A space above the fluidized bed 3 in the furnace body 2 serves as a freeboard 7. The furnace body 2 comprises a cylindrical furnace body that includes a furnace bed whose horizontal section is circular. An incombustible discharge port 5 is provided at the center of the cylindrical furnace body in the bottom of the furnace body 2. The furnace body 2 may be a substantially square tubular shape having a furnace bed whose horizontal section is rectangular.

The base plate 4 at the bottom of the furnace body 2 is formed into a substantially inverted conical shape (mortar-shape) around the incombustible discharge port 5, and has a number of gas diffusion nozzles (not shown) for injecting fluidizing air as a fluidizing gas into the furnace. A supply chute 37 is formed on a furnace wall of the furnace body 2 to introduce wastes into the furnace, and an exhaust port 6 is formed in a top end of the furnace body 2 to discharge an exhaust gas.

As shown in FIGS. 1 and 2, a plurality of secondary combustion air blowing nozzles 8 are provided on the furnace wall of the furnace body 2. As long as the secondary combustion air blowing nozzles 8 are provided in the freeboard 7, secondary combustion of a combustible gas is performed by blowing the secondary combustion air, and thus the installation positions of the secondary combustion air blowing nozzles 8 are not limited. However, it is desirable that the secondary combustion air blowing nozzles 8 are provided at the lowest possible position of the freeboard and secondary combustion air is blown from a plurality of locations, i.e., two or more locations, along the circumferential direction of the furnace wall, thereby utilizing the volume of the freeboard effectively and securing the retention time for secondary combustion. Water spray nozzles 9 are inserted respectively in the secondary combustion air blowing nozzles 8, so that water can be sprayed from the water spray nozzles 9 at the same time when secondary combustion air is blown from the secondary combustion air blowing nozzles 8. The water spray nozzle 9 may use a single-fluid nozzle for spraying water only or a two-fluid nozzle for spraying air and water.

In the fluidized bed incinerator 1 configured as shown in FIGS. 1 and 2, wastes are supplied from the supply chute 37 to the fluidized bed 3. At this time, the fluidizing air is ejected at a uniform flow rate throughout the fluidized bed 3 from the gas diffusion nozzles of the base plate 4. The fluidized bed 3 now turns into a fluidized-bed where the fluidized medium is fluidized vigorously up and down. The fluidizing air (primary air) is supplied to the fluidized bed 3 so that an air ratio in the sand becomes in the range of 0.5 to 0.7. The temperature of the fluidized bed 3 is measured by a furnace bed thermometer 38 inserted in the sand bed and maintained in the range of 550°C to 600°C.

The wastes introduced into the furnace are pyrolyzed in the fluidized bed 3, and part of the wastes are combusted to produce a combustible gas. At this time, if the air ratio in the sand is 0.3 or lower, the amount of generated combustible gas becomes excessively large, thus making the proportion of secondary combustion too large and making the amount of sprayed water required for the reduction of NOx too large. If the air ratio in the sand is 0.8 or higher, the proportion of secondary combustion becomes too small, thus greatly reducing the effect of the reduction of NOx obtained by the water spray.

In order to suppress the pyrolysis rate for stably generating a combustible gas, the temperature of the furnace bed should be low. If the temperature of the furnace bed exceeds 650°C, the rate of drying and pyrolysis of the wastes is increased, and thus the amount of generated combustible gas fluctuates depending on variations in quality and quantity of the wastes, so that the effect of the reduction of NOx is liable to fluctuate in the case where the amount of sprayed water is constant. If the temperature of the furnace bed becomes too low, i.e., 500°C or lower, the pyrolysis is suppressed and the generation of a combustible gas is suppressed. If the water content of the wastes becomes temporarily large, the temperature of the furnace bed is lowered to suppress the pyrolysis and the combustion of the unburned matter in the furnace bed is suppressed, and thus the temperature of the furnace bed may be drastically lowered too much, and may be difficult to maintain.

The temperature of the fluidized bed 3 is controlled by adjusting the amount of the fluidizing air or supplying water to the furnace bed (water injection into the furnace bed).

Further, secondary combustion air is blown into the freeboard 7 from the secondary combustion air blowing nozzles 8. At this time, the secondary combustion air may be blown in alone or may be blown in as a mixed gas of air and an exhaust gas. In parallel with this blowing, water is sprayed into the freeboard 7 from the water spray nozzles 9 that are inserted in the respective secondary combustion air blowing nozzles 8. At this time, the amount of sprayed water is in the range of 30 to 600 liters (L) per ton (t) of wastes, preferably 50 to 300 liters (L) per ton of wastes. If the amount of sprayed water is less than 30 L/t of wastes, it is difficult to obtain the denitration effect. As the amount of sprayed water increases, the denitration effect increases. With a further increase of the amount of sprayed water, the denitration effect reaches its peak. If the amount of sprayed water becomes not less than 600 L/t of wastes, the denitration effect remains essentially unchanged. As the amount of sprayed water increases, the combustion temperature is lowered, thus generating CO or the like due to incomplete combustion. Consequently, the upper limit for the amount of sprayed water is set to 600 L/t of wastes, and the amount of sprayed water is determined from the amount of heat generated by the material to be incinerated and the total air ratio so that the temperature of a furnace top measured by the furnace top thermometer 39 provided in the freeboard will not become 850°C or lower. The secondary combustion air blowing should be performed such that the total air ratio becomes 1.2 or higher to suppress the generation of CO, and becomes about 1.8 or lower from the standpoint of heat recovery.

The water spray to the freeboard is performed at the same time when secondary combustion air is blown into the freeboard, and thus water can be supplied to a secondary combustion site without excess and deficiency. Therefore, the combustion temperature is lowered and secondary combustion takes place under the coexistence of water, thus suppressing production reaction of NOx. As a method for water spray, in addition to using the above water spray nozzles, a mist may be added to the secondary combustion air.

In the case where the water spray nozzles 9 are inserted in the respective secondary combustion air blowing nozzles 8, tip end portions of the water spray nozzles 9 may project slightly outwardly from the tip ends of the secondary combustion air blowing nozzles 8. Alternatively, the water spray nozzles 9 may be provided separately from the secondary combustion air blowing nozzles 8 and water may be sprayed into the secondary combustion site into which secondary combustion air is blown.

Not only one water spray nozzle 9, but also two or more water spray nozzles 9 may be inserted in each of the secondary combustion air blowing nozzles 8.

The water spray nozzle 9 should preferably be inserted in the secondary combustion air blowing nozzle 8 because the combustion air and the spray water can be simultaneously supplied to the secondary combustion site reliably and the water spray nozzle can be protected against damage.

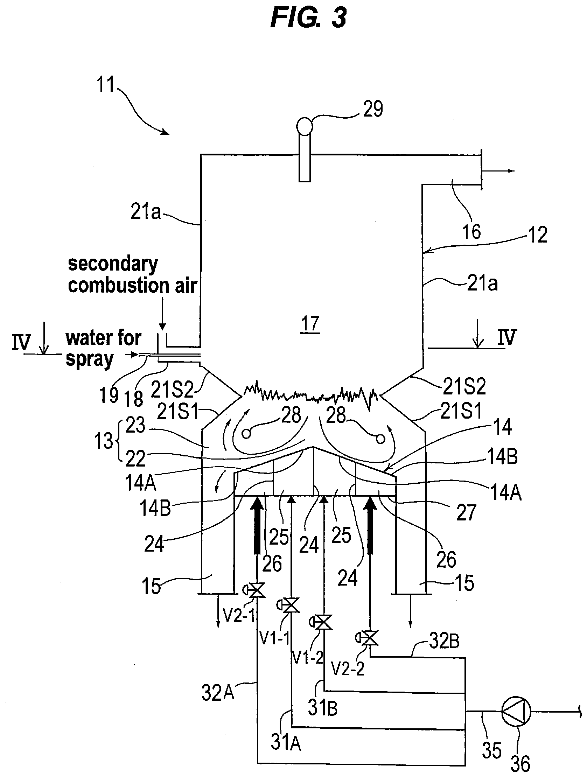

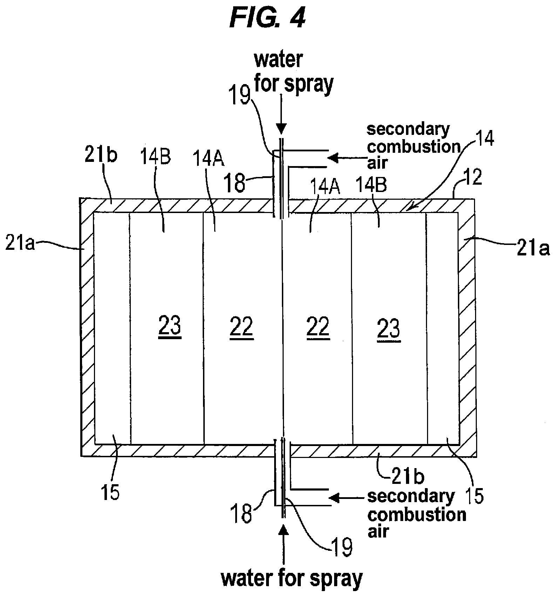

FIG. 3 is a vertical cross-sectional view showing a fluidized bed incinerator according to another embodiment of the present invention. FIG. 4 is a cross-sectional view taken along line IV - IV of FIG. 3. As shown in FIGS. 3 and 4, a fluidized bed incinerator 11 includes a furnace body 12 for treating wastes, a fluidized bed 13 for pyrolyzing wastes introduced therein and combusting part of the wastes, and a base plate 14 for supporting the fluidized bed 13. The fluidized bed 13 comprises a sand bed which is formed by an accumulation of a fluidized medium composed typically of sand such as silica sand. The furnace body 12 comprises a furnace body having a substantially square tubular shape whose horizontal section is substantially rectangular. A space above the fluidized bed 13 in the furnace body 12 serves as a freeboard 17.

As shown in FIG. 3, the furnace body 12 having a substantially square tubular shape has a pair of side walls 21a, 21a facing each other and having portions that are concave inwardly, and a pair of side walls (21b in FIG. 4) facing each other and connected to the pair of the side walls 21a, 21a. Each of the concave portions of the furnace body 12 is formed by a slanted portion 21S1 inclined inwardly of the furnace body 12 from the lower part to the upper part and a slanted portion 21S2 disposed above the slanted portion 21S1 and inclined outwardly of the furnace body 12 from the lower part to the upper part. Each of the slanted portions 21S1 functions as a deflector for allowing an upward flow of the fluidized medium to turn easily toward the interior side of the furnace body 12.

A supply port (not shown) is formed in one of the side walls 21a of the furnace body 12 to introduce the wastes into the furnace, and an exhaust port 16 is formed in a top end of the furnace body 12 to discharge an exhaust gas. The base plate 14, which is installed in the furnace body 12, has a chevron-shaped cross section which is highest at the center and is gradually lowered toward the opposite side edges. Incombustible discharge ports 15, 15 are formed between the opposite side edges of the base plate 14 and the side walls 21a, 21a. The base plate 14 is highest at the center, and has descending slopes that are progressively lower toward the opposite side edges. The base plate 14 is not slanted, but is flat in a direction perpendicular to a sheet surface of FIG. 3. The base plate 14 has a number of gas diffusion nozzles for ejecting fluidizing air as a fluidizing gas into the furnace.

As shown in FIG. 3, a bottom plate 27 is provided below the base plate 14 and spaced from the base plate 14. A space between the base plate 14 and the bottom plate 27 is divided into four spaces by three partition plates 24 that extend from the base plate 14 to the bottom plate 27. Since the space between the base plate 14 and the bottom plate 27 is divided by the three partition plates 24, two central air chambers 25, 25 and two side air chambers 26, 26 are formed below the base plate 14. In order to distinguish the two base plates for forming the two central air chambers 25, 25 and the two base plates for forming the two side air chambers 26, 26 in FIG. 3, the base plates for the air chambers 25, 25 are referred to as base plates 14A, 14A and the base plates for the air chambers 26, 26 are referred to as base plates 14B, 14B.

As shown in FIG. 3, air pipes 31A, 31B, 32A, 32B are connected to the four air chambers 25, 25, 26, 26 respectively to supply the fluidizing air from outside of the furnace. The air pipes 31A, 31B, 32A, 32B have respective regulating valves V1-1, V1-2, V2-1, V2-2 for regulating the flow rate of air that flows in the air pipes 31A, 31B, 32A, 32B. The four air pipes 31A, 31B, 32A, 32B have upstream ends joined together into a single air pipe 35, and an air blower 36 for delivering fluidizing air under pressure is provided in the air pipe 35. The four air pipes 31A, 31B, 32A, 32B may alternatively have respective air blowers.

As shown in FIGS. 3 and 4, a plurality of secondary combustion air blowing nozzles 18 are provided on the side walls of the furnace body 12. The secondary combustion air blowing nozzles 18 are nozzles for blowing secondary combustion air into the freeboard 17 to combust a combustible gas. The secondary combustion air blowing nozzles 18 are configured to blow secondary combustion air from a plurality of locations, i.e., two or more locations of the side walls. Water spray nozzles 19 are inserted respectively in the secondary combustion air blowing nozzles 18, so that water can be sprayed from the water spray nozzles 19 at the same time when secondary combustion air is blown from the secondary combustion air blowing nozzles 18.

In the case where the water spray nozzles 19 are inserted in the respective secondary combustion air blowing nozzles 18, tip end portions of the water spray nozzles 19 may project slightly outwardly from the tip ends of the secondary combustion air blowing nozzles 18. Alternatively, the water spray nozzles 19 may be provided separately from the secondary combustion air blowing nozzles 18 and water may be sprayed into the secondary combustion site into which secondary combustion air is blown.

Not only one water spray nozzle 19, but also two or more water spray nozzles 19 may be inserted in each of the secondary combustion air blowing nozzles 18.

The water spray nozzles 19 should preferably be inserted in the secondary combustion air blowing nozzles 18 because the combustion air and the spray water can be simultaneously supplied to the secondary combustion site reliably and the water spray nozzles can be protected against damage.

As a method for water spray, in addition to using the water spray nozzles, a mist may be added to the secondary combustion air.

In the fluidized bed incinerator 11 configured as shown in FIGS. 3 and 4, by adjusting the opening degrees of the regulating valves V1-1, V1-2 to regulate the flow rates of air flowing in the air pipes 31A, 31B, the fluidizing air is ejected from the air diffusion nozzles disposed on the two central base plates 14A, 14A so as to give a substantially small fluidizing velocity. As a result, weak fluidizing zones in which the fluidized medium is fluidized at a relatively low speed are formed on the two central base plates 14A, 14A. Further, by adjusting the opening degrees of the regulating valves V2-1, V2-2 to regulate the flow rates of air flowing in the air pipes 32A, 32B, the fluidizing air is ejected from the air diffusion nozzles disposed on the two side base plates 14B, 14B so as to give a substantially large fluidizing velocity. As a result, intense fluidizing zones in which the fluidized medium is fluidized actively are formed on the two side base plates 14B, 14B.

Since the weak fluidizing zones that are formed on the two central base plates 14A, 14A and the intense fluidizing zones that are formed on the two side base plates 14B, 14B are present adjacent to each other, moving-beds 22 in which the fluidized medium moves downwardly at a relatively low speed are formed in the weak fluidizing zones, whereas fluidized-beds 23 in which the fluidized medium moves upwardly are formed in the intense fluidizing zones. Consequently, in the entire region where the weak fluidizing zone and the intense fluidizing zone are positioned adjacent to each other, the fluidized medium moves from the moving-bed 22 to the fluidized-bed 23 in a lower portion of the entire region, whereas the fluidized medium moves from the fluidized-bed 23 to the moving-bed 22 in an upper portion of the entire region, thus forming right and left circulating flows of the fluidized medium circulating the moving-bed 22 and the fluidized-bed 23.

The wastes that are supplied into the furnace are taken into the moving-bed 22 and moves downwardly together with the fluidized medium. In the moving-bed 22, the wastes are dried and pyrolyzed, thus producing a combustible gas. An unburned matter (char) produced when the wastes are pyrolyzed is directed together with the fluidized medium to the fluidized-bed 23 in which part of the unburned matter is combusted to heat the fluidized medium. In the fluidized-bed 23, the fluidized medium (fluidized sand) is heated to a temperature which is high enough to appropriately dry and pyrolyze the wastes when the fluidized medium is circulated to the moving-bed 22. The fluidizing air (primary air) is supplied to the fluidized bed 13 comprising the moving-bed 22 and the fluidized-bed 23 so that the air ratio in the sand becomes in the range of 0.3 to 0.8, preferably 0.5 to 0.8. The temperature of the fluidized bed 13 is measured by furnace bed thermometers 28 and maintained in the range of 500 to 650°C, preferably 550 to 600°C. The reasons for the ranges of the air ratio in the sand and the furnace bed temperature have been described above.

Further, secondary combustion air is blown into the freeboard 17 from the secondary combustion air blowing nozzles 18. At this time, the secondary combustion air may be blown in alone or may be blown in as a mixed gas of air and an exhaust gas. In parallel with this blowing, water is sprayed into the freeboard 17 from the water spray nozzles 19 that are inserted in the respective secondary combustion air blowing nozzles 18. At this time, the amount of sprayed water is in the range of 30 to 600 liters (L) per ton (t) of wastes, preferably 50 to 300 liters (L) per ton of wastes. When the amount of sprayed water increases, the combustion temperature is lowered, thus generating CO or the like due to incomplete combustion. Consequently, the upper limit for the amount of sprayed water is set to 600 L/t of wastes, and the amount of sprayed water is determined from the amount of heat generated by the material to be incinerated and the total air ratio so that the temperature of a furnace top measured by the furnace top thermometer 29 provided in the freeboard will not become 850°C or lower. The secondary combustion air blowing should be performed such that the total air ratio becomes 1.2 or higher to suppress the generation of CO, and becomes about 1.8 or lower from the standpoint of heat recovery.

The water spray to the freeboard is performed at the same time when secondary combustion air is blown into the freeboard, and thus water can be supplied to a secondary combustion site without excess and deficiency. Therefore, the combustion temperature is lowered and water coexists in the secondary combustion site, thus suppressing production reaction of NOx. As a method for water spray, in addition to using the above water spray nozzles, a mist may be added to the secondary combustion air.

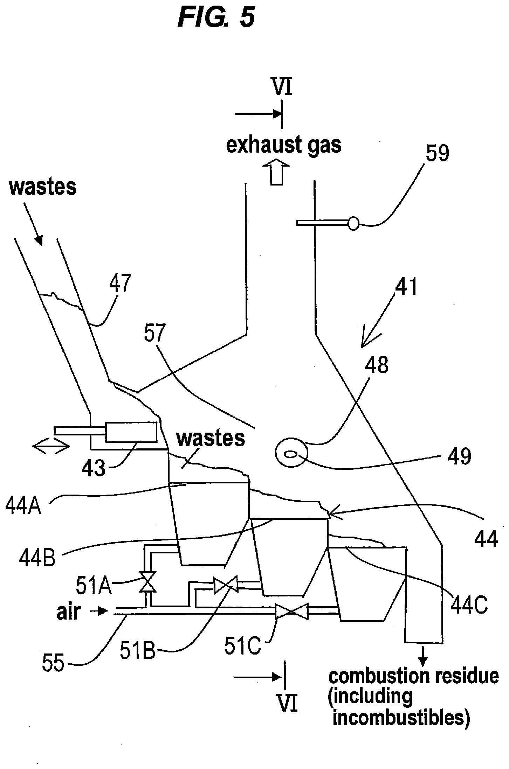

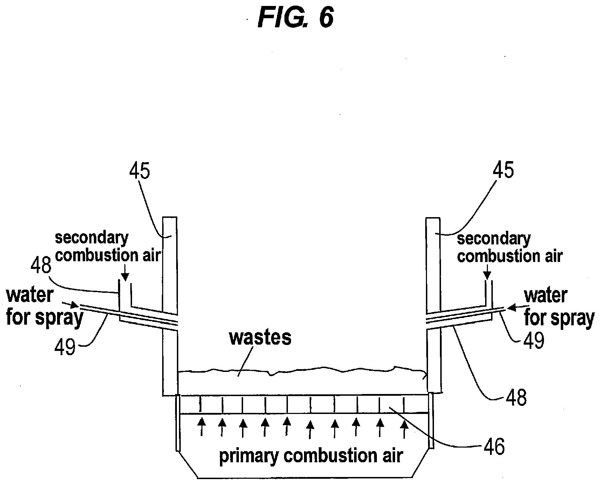

FIG. 5 is a vertical cross-sectional view showing a stoker furnace as a waste incinerator according to an embodiment of the present invention. FIG. 6 is a cross-sectional view taken along line VI - VI of FIG. 5. In FIG. 6, upper side walls 45 of the stoker furnace are partly omitted from illustration. As shown in FIGS. 5 and 6, wastes are supplied from a supply chute 47 provided on the stoker furnace 41, and supplied into the furnace by a waste supply pusher 43 provided at a lower portion of the supply chute 47. The wastes that have been supplied into the furnace are fed successively to a fire grate group 44A in a drying zone, a fire grate group 44B in a main combustion zone, and a fire grate group 44C in a post-combustion zone while being stirred by reciprocating motion of the fire grate group 44. In the drying zone, preheated drying air is supplied into the wastes from an air blower (not shown) through an air supply pipe 55 from below a fire grate 46 in accordance with the opening degree of a regulating valve 51A. Thus, the wastes are dried as water is evaporated therefrom, and the temperature of the wastes rises and a volatile content thereof starts to volatilize. In the main combustion zone, primary combustion air is supplied into the wastes from below the fire grate 46 in accordance with the opening degree of a regulating valve 51B. Thus, the wastes are partly combusted to produce a combustible gas. The primary combustion air is supplied to the main combustion zone so that the air ratio becomes in the range of 0.3 to 0.8 for generating a combustible gas. In a combustion chamber 57 provided above the main combustion zone, secondary combustion air is supplied to the generated combustion gas from a plurality of secondary combustion air blowing nozzles 48 provided on the side walls 45 of the furnace, and water is sprayed from water spray nozzles 49 in the range of 30 to 600 liters per ton (t) of wastes, so that secondary combustion takes place in the presence of water, thereby suppressing the generation of NOx. When the amount of sprayed water increases, the combustion temperature is lowered, thus generating CO or the like due to incomplete combustion. Consequently, the upper limit for the amount of sprayed water is set to 600 L/t of wastes, and the amount of sprayed water is determined from the amount of heat generated by the material to be incinerated and the total air ratio so that the temperature of a furnace top measured by the furnace top thermometer 59 provided in the combustion chamber will not become 850°C or lower. The secondary combustion air blowing should be performed such that the total air ratio becomes 1.2 or higher to suppress the generation of CO, and becomes about 1.8 or lower from the standpoint of heat recovery. The wastes including an unburned matter which are left after the wastes have been partly combusted in the main combustion zone are delivered to the post-combustion zone. In the post-combustion zone, post-combustion air is supplied into the wastes from below the fire grate 46 in accordance with the opening of a regulating valve 51C. Thus, the unburned matter in the wastes is combusted, and discharged as a combustion residue including incombustibles from a downstream end of the fire grate 44C in the post-combustion zone. The reasons why the air ratio of the primary combustion air in the stoker furnace 41 is in the range of 0.3 to 0.8 are the same as with the fluidized bed incinerator 1 described above.

Water spray is performed basically in the same arrangement as the fluidized bed incinerators described above. Therefore, the water spray nozzles 49 may be inserted in the respective secondary combustion air blowing nozzles 48, or a mist may be added to the secondary combustion air. An exhaust gas or the like may be circulated and supplied together with the secondary combustion air by the secondary combustion air blowing nozzles 48.

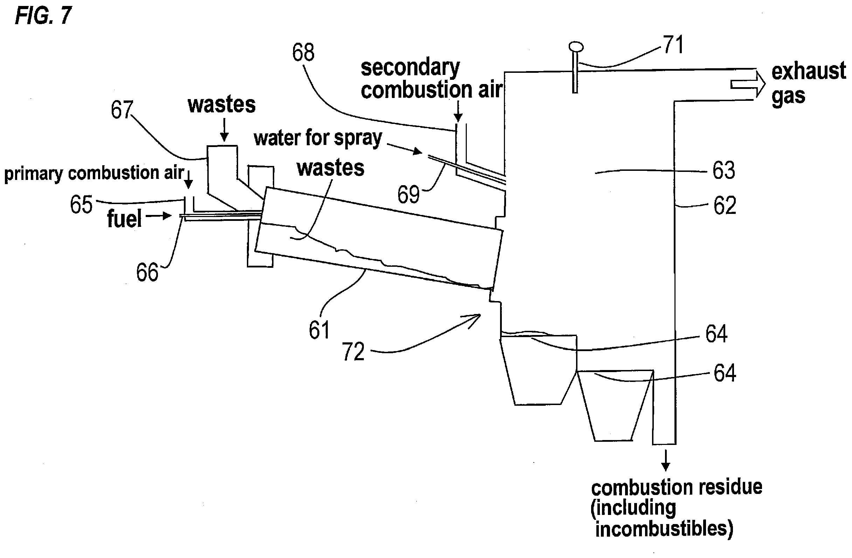

FIG. 7 is a vertical cross-sectional view showing a kiln stoker furnace as a waste incinerator according to an embodiment of the present invention.

As shown in FIG. 7, the kiln stoker furnace 72 includes a cylindrical kiln 61 and a stoker furnace 62 provided on the outlet of the kiln 61. The stoker furnace 62 includes a secondary combustion chamber 63. Wastes are introduced into the kiln 61 from a supply chute 67 provided on the inlet of the kiln 61. The kiln 61 is inclined so as to descend from the inlet toward the outlet of the kiln 61. The wastes that have been introduced into the kiln 61 is delivered from the inlet toward the outlet of the kiln 61 by rotation of the kiln 61. At the inlet of the kiln 61, a start-up burner, a primary combustion air supply nozzle 65, and a fuel supply nozzle 66 are provided. The primary combustion air is supplied into the kiln 61 to combust part of the wastes. According to the present embodiment, the primary combustion air is supplied from the primary combustion air supply nozzle 65 so that the air ratio becomes in the range of 0.3 to 0.8 to combust part of the wastes, thus generating a combustible gas. Secondary combustion air supply nozzles 68 and water spray nozzles 69 are provided in the secondary combustion chamber 63 provided at the outlet of the kiln 61. The secondary combustion air supply nozzles 68 supply secondary combustion air, and the water spray nozzles 69 spray water at a rate ranging from 30 to 600 liters (L) per ton (t) of wastes, so that secondary combustion of the combustible gas takes place in the presence of water, thus suppressing the generation of NOx. When the amount of sprayed water increases, the combustion temperature is lowered, thus generating CO or the like due to incomplete combustion. Consequently, the upper limit for the amount of sprayed water is set to 600 L/t of wastes, and the amount of sprayed water is determined from the amount of heat generated by the material to be incinerated and the total air ratio so that the temperature of a furnace top measured by a furnace top thermometer 71 provided in the secondary combustion chamber will not become 850°C or lower. The secondary combustion air blowing should be performed such that the total air ratio becomes 1.2 or higher to suppress the generation of CO, and becomes about 1.8 or lower from the standpoint of heat recovery. The reasons why the air ratio of the primary combustion air in the kiln stoker furnace 72 is in the range of 0.3 to 0.8 are the same as with the fluidized bed incinerator 1 described above.

Water spray is performed basically by the same arrangement as the fluidized bed incinerators described above. Therefore, the water spray nozzle 69 may be inserted in the secondary combustion air blowing nozzle 68, or a mist may be added to the secondary combustion air. An exhaust gas or the like may be circulated and supplied together with the secondary combustion air by the secondary combustion air blowing nozzle 68.

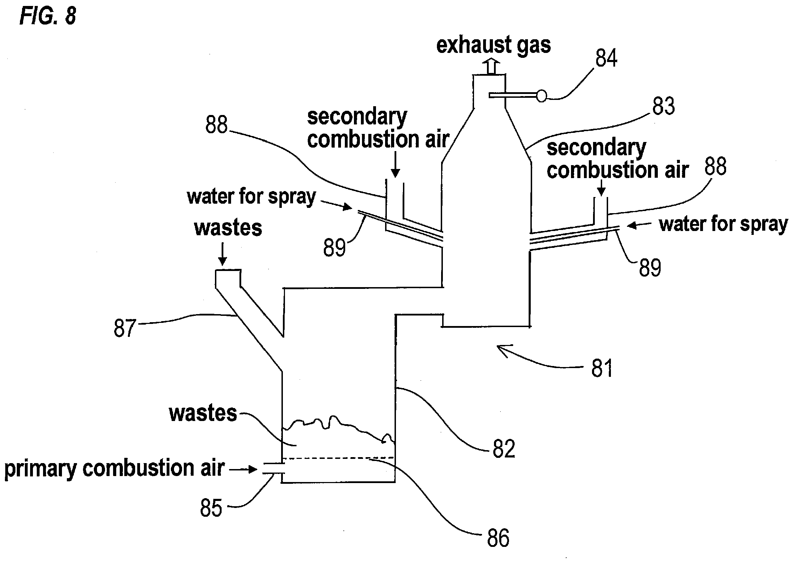

FIG. 8 is a vertical cross-sectional view showing a gasification combustion furnace as a waste incinerator according to an embodiment of the present invention.

As shown in FIG. 8, the gasification combustion furnace 81 includes a primary furnace (gasification chamber) 82 for combusting part of wastes to generate a combustible gas, and a secondary furnace (gas combustion chamber) 83 for performing secondary combustion of the combustible gas. The wastes are introduced into the primary furnace 82 from a supply chute 87 provided on the primary furnace 82 through a double damper or the like (not shown). The primary combustion air is supplied to the primary furnace 82 from a primary combustion air supply pipe 85 to combust part of the wastes, thereby generating a combustible gas. According to the present invention, the primary combustion air is supplied from the primary combustion air supply pipe 85 so that the air ratio becomes in the range of 0.3 to 0.8 to combust part of the wastes, thus generating a combustible gas.

In FIG. 8, the primary furnace 82 has a fire grate 86 serving as a fixed bed. A combustion residue including incombustibles is discharged from the primary furnace 82 through a manhole (not shown) provided in a side wall of the primary furnace 82. However, the fire grate may be operated to automatically discharge the combustion residue.

In the secondary furnace 83, secondary combustion air is supplied to the combustible gas generated in the primary furnace 82 from secondary combustion air blowing nozzles 88, and water spray is performed in the range of 30 to 600 liters (L) per ton (t) of wastes from the water spray nozzles 89, so that secondary combustion of the combustible gas takes place in the presence of water, thereby suppressing the generation of NOx. When the amount of sprayed water increases, the combustion temperature is lowered, thus generating CO or the like due to incomplete combustion. Consequently, the upper limit for the amount of sprayed water is set to 600 L/t of wastes, and the amount of sprayed water is determined from the amount of heat generated by the material to be incinerated and the total air ratio so that the temperature of a furnace top measured by a furnace top thermometer 84 provided in the secondary furnace will not become 850°C or lower. The secondary combustion air blowing should be performed such that the total air ratio becomes 1.2 or higher to suppress the generation of CO, and becomes about 1.8 or lower from the standpoint of heat recovery. The reasons why the air ratio of the primary combustion air in the gasification combustion furnace 81 is in the range of 0.3 to 0.8 are the same as with the fluidized bed incinerator 1 described above.

Water spray is performed basically by the same arrangement as the fluidized bed incinerators described above. Therefore, the water spray nozzles 89 may be inserted in the secondary combustion air blowing nozzles 88, or a mist may be added to the secondary combustion air.

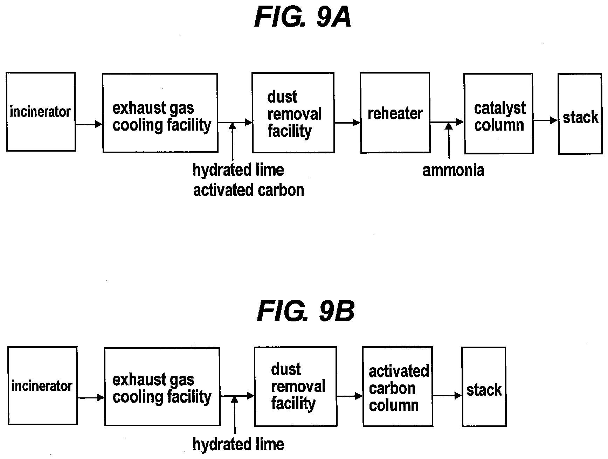

FIGS. 9A and 9B are block diagrams showing processing flows for treating an exhaust gas discharged from the incinerators. FIG. 9A shows a processing flow according to the background art, and FIG. 9B shows a processing flow according to the present invention. As shown in FIG. 9A, conventionally, in the case where NOx is reduced to 50 ppm or lower, an exhaust gas discharged from the incinerator is cooled to 200°C or lower (temperature reduction and heat recovery) by an exhaust gas cooling facility, and dust is removed from the exhaust gas by a dust removal facility comprising a bag filter, and then the exhaust gas is reheated up to about 210°C by a reheater and the reheated exhaust gas is introduced into a catalyst column. Chemicals including hydrated lime, activated carbon, and like are added to the exhaust gas at an upstream side of the dust removal facility, thereby removing acid gas such as HCI and SOx and dioxins from the exhaust gas. Ammonia is added to the exhaust gas at the inlet of the catalyst column to cause ammonia and NOx to react selectively in the presence of catalyst, thereby decomposing NOx in the catalyst column. Since the removal efficiency of acid gas and dioxins in the dust removal facility comprising the bag filter is higher at lower temperatures, and for increasing the heat recovery efficiency, the temperature of the exhaust gas at the inlet of the dust removal facility is often lowered to about 180°C or lower in the latest plant. On the other hand, because the decomposition efficiency in the catalyst column is higher at higher temperatures and the poisoning of the catalyst by acid ammonium sulfate is more likely to proceed at lower temperatures, the exhaust gas discharged from the dust removal facility is reheated up to about 210°C, using recovered steam. The use of the steam for reheating the exhaust gas is responsible for a reduction in the power generation efficiency. In recent years, attempts have been made to use low-temperature active catalysts and also to use sodium bicarbonate as a chemical to be added at an upstream side of the dust removal facility for increasing the removal rate of SOx, thereby preventing acid ammonium sulfate from being produced.

On the other hand, according to the present invention, since the concentration of NOx generated in the incinerator can be reduced to 20 ppm or lower, the exhaust gas treating system does not need to include a catalyst column, as shown in FIG. 9B. As shown in FIG. 9B, the exhaust gas discharged from the incinerator is cooled to 200°C or lower (temperature reduction and heat recovery) by an exhaust gas cooling facility, and dust is removed from the exhaust gas by a dust removal facility comprising a bag filter, and chemicals including hydrated lime and the like are added to the exhaust gas at an upstream side of the dust removal facility, thereby removing acid gas such as HCI and SOx from the exhaust gas. Further, if harmful substances such as dioxins and mercury are required to be removed from the exhaust gas with high efficiency, an activated carbon column may be added at a downstream side of the dust removal facility. Since the removal efficiency of acid gas in the dust removal facility comprising the bag filter is higher at lower temperatures, and the efficiency of removal function of harmful substances in the activated carbon column is also higher at lower temperatures, a reasonable processing flow can be designed for increasing the heat recovery efficiency to lower the temperature of the exhaust gas at the inlet of the dust removal facility to 180°C or lower.

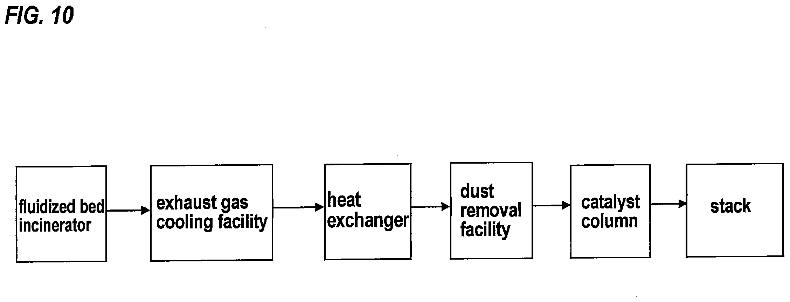

Next, the results of tests conducted in the fluidized bed incinerator shown in FIG. 3 in the facility whose processing flow is illustrated in FIG. 10 are shown in FIG. 11. Municipal wastes were used as wastes. The results of the tests represent average values of stable one-hour data in the respective tests unless otherwise specified. The concentration of NOx and the concentration of CO were continuously measured by an infrared analyzer in the stack, and were shown at 12% O₂ using the oxygen concentration of a magnetic oxygen concentration meter.

The data in Run0 are data obtained under operating conditions according to the background art. In the ordinary operation according to the background art, the amount of fluidizing air was large such that the air ratio was 0.9, and the temperature of the furnace bed was slightly high such that it was 630°C. The temperature of the furnace top was adjusted to about 900°C by spraying water in the furnace top, but the amount of sprayed water was small such that it was 30L/t of wastes. The total air ratio was 1.7 by the blowing of secondary combustion air. The concentration of CO was 0 ppm, whereas the concentration of NOx was 82 ppm.

The data in Run1 represent the results of a test conducted using the fluidized bed incinerator according to the present invention. In the test operation, since the primary air ratio by the fluidizing air was suppressed to 0.56, the cycle of pressure fluctuations in the furnace was longer and the furnace bed temperature was lowered to 575°C, so that pyrolysis and part of combustion reaction were slowed down.

In Run1, pyrolysis and part of combustion were slowed down, and the air ratio in the sand and the total air ratio were reduced, i.e., the primary air ratio (air ratio in the sand) was 0.56 and the total air ratio was about 1.5.

Water was sprayed into the furnace from the secondary air blowing nozzles at a rate of 200 L/t of wastes, and thus the concentration of NOx was greatly reduced from 82 ppm in Run0 to 26 ppm in Run 1. The average value of the concentration of CO was 1.8 ppm.

In the example of Run1 that represents the operation according to the present invention, the fluidization was suppressed to perform slow combustion, and thus the power consumption was reduced by 12 to 14 % with a positive blower and by about 30 % with an induced blower.

The data in Run2 represent the results of another test of the fluidized bed incinerator according to the present invention. In Run2, the primary air ratio was 0.55, and the total air ratio in the secondary combustion was 1.7. The furnace bed temperature was 600°C, whereas the furnace top temperature was 880°C.

Water was sprayed into the furnace from the secondary air blowing nozzles at a rate of 250 L/t of wastes, and thus the concentration of NOx was suppressed to 13 ppm and the concentration of CO was suppressed to 9.6 ppm.

Thus, in the fluidized bed incinerator according to the present invention, drying, pyrolysis and part of combustion of the wastes are slowly performed in the furnace bed, and a uniform combustion site is formed in the freeboard. It is considered that the amount of fluidizing air is suppressed to reduce the proportion of combustion in the fluidized bed, thereby generating a combustible gas, and water is sprayed in the freeboard simultaneously with supply of secondary combustion air to perform secondary combustion of the combustible gas, and thus the suppression of the generation of NOx is extremely effectively performed.

The following has been confirmed from the above results of the tests:
1. The concentration of CO could be reduced to 10 ppm or lower and simultaneously the concentration of NOx could be reduced to 30 ppm or lower by keeping the air ratio in the sand in the range of about 0.55 to 0.56 and the total air ratio in the range of about 1.5 to 1.7 and introducing water in the range of 200 to 250 L/t of wastes together with secondary combustion air into the furnace.
2. The amount of fluidizing air was suppressed to promote the slowing down of the gasification, and the total air ratio was suppressed to about 1.5, and thus the power consumption could be reduced by 12 to 14 % with a positive blower and by about 30 % with an induced blower.

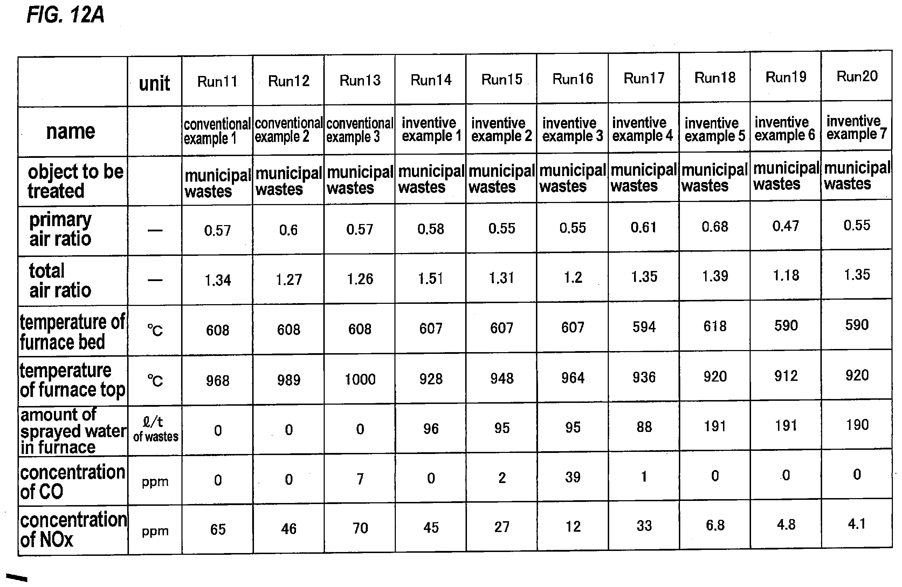

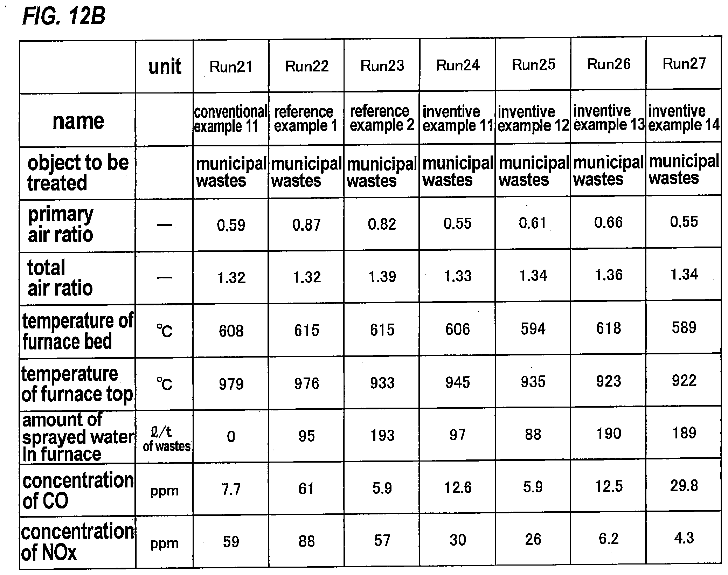

FIGS. 12A and 12B show the results of tests conducted in the fluidized bed incinerator shown in FIG. 3 in the facility whose processing flow is illustrated in FIG. 10.

The concentration of NOx and the concentration of CO were measured by the same measuring method as the method described above. However, the concentration of NOx and the concentration of CO were not converted for O₂ at 12%.

In Run11 to Run20 of FIG. 12A, data of the results of tests at the time when the stable state has continued for about 10 minutes are shown. Data of examples 1 to 3 according to the background art in which water was not sprayed into the secondary combustion site in the furnace are represented by Run11 to Run13. Data of inventive examples 1 to 7 in which the primary air ratio was suppressed in the range of 0.47 to 0.68, and under the condition that fluidization was slowed down, the total air ratio was set in the range of 1.18 to 1.51 are represented by Run14 to Run20.

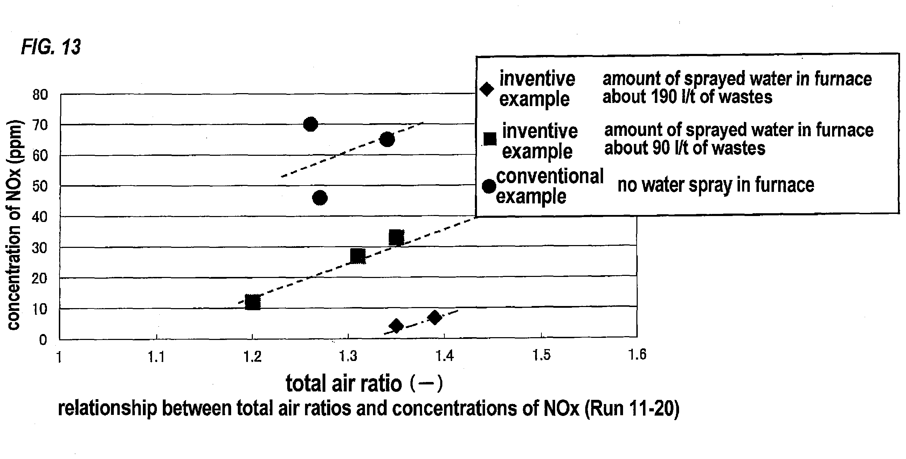

FIG. 13 is a graph showing the relationship between total air ratios and the concentrations of NOx, in the data of Run11 to Run20 shown in FIG. 12A, using the amount of sprayed water in the furnace as a parameter. As shown in FIG. 13, the concentration of NOx decreased as the total air ratio decreased. When water was sprayed in the furnace, the concentration of NOx was reduced further significantly in proportion to the amount of sprayed water, as indicated by the data of inventive examples 1 to 7. According to the background art in which the total air ratio was in the range of 1.3 to 1.4 and no water was sprayed in the furnace, the concentration of NOx was about 70 ppm. According to inventive examples 1 to 4 in which water was sprayed in the furnace at a rate of about 90 L/t of wastes, the concentration of NOx was reduced to about 30 ppm. According to inventive examples 5 and 6 in which water was sprayed in the furnace at an increased rate of about 190 L/t of wastes, the concentration of NOx was reduced to 10 ppm or lower.

In Run21 to Run27 of FIG. 12B, average data obtained when the fluidized bed incinerator was operated for not less than one hour under preset conditions are shown. Data of example 11 according to the background art in which no water was sprayed in the furnace are represented by Run21. Data of reference examples 1 and 2 in which the primary air ratio was 0.8 or higher and water was sprayed in the furnace are represented by Run22 and Run23. Data of inventive examples 11 to 14 in which the primary air ratio was set in the range of 0.55 to 0.66 are represented by Run24 to Run27. The total air ratios in Run21 to Run27 shown in FIG. 12B were set in the range of 1.32 to 1.39.

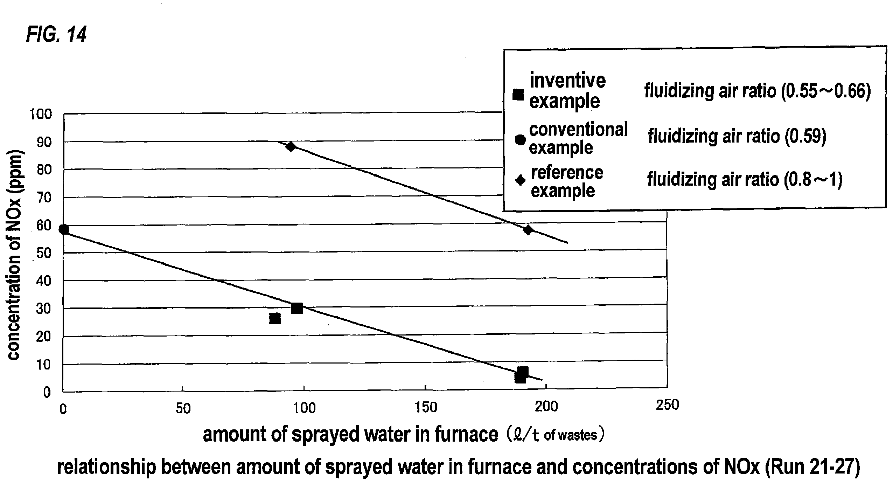

FIG. 14 shows the relationship between the amount of sprayed water in the furnace and the concentrations of NOx with respect to Run21 to Run27 shown in FIG. 12B in which the total air ratio is substantially constant, Run21 to Run27 being divided into two groups having a primary air ratio (fluidizing air ratio) of about 0.8 and a primary air ratio (fluidizing air ratio) of 0.56 to 0.66, respectively. As is apparent from FIG. 14, when the amount of sprayed water in the furnace increased, the concentration of NOx decreased. However, the level of the concentration of NOx in reference examples 1, 2 in which the fluidizing air ratio was not less than 0.8 was about 60 ppm higher than in inventive examples 11 to 14 in which the fluidizing air ratio was in the range of 0.55 to 0.66.

It is generally estimated from FIG. 14 that in the case where the fluidizing air ratio is about 0.8 ppm, in order to keep the concentration of NOx at 20 ppm or lower, the amount of sprayed water is required to be about 300 L/t of wastes.

It can be seen from the relationship between the total air ratios and the concentrations of NOx shown in FIG. 13 that when the total air ratio increases by 0.2, the concentration of NOx increases by about 20 ppm. In order to reduce the increase by 20 ppm in the concentration of NOx by spraying water in the furnace, it was necessary to spray water in the furnace at a rate of about 100 L/t of wastes. Consequently, in order to reduce the concentration of NOx to 20 ppm or lower when the fluidizing air ratio is about 0.8 and the total air ratio is in the range of about 1.8 to 2.0, the amount of sprayed water is estimated to be about 500 to 600 L/t of wastes, and hence a large amount of sprayed water is required.

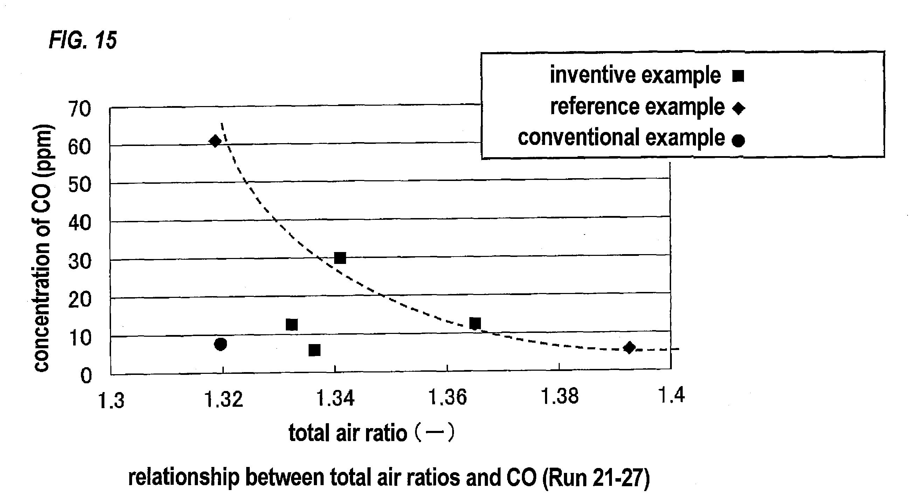

FIG. 15 shows the relationship between total air ratios and the concentrations of CO with respect to Run21 to Run27 shown in FIG. 12B wherein the total air ratio is set in the range of 1.32 to 1.39.

As shown in FIG. 15, examples in which the concentration of CO was high when the total air ratio was smaller than 1.35 appeared. Particularly, in reference example 1 (Run22) in which the primary air ratio (fluidizing air ratio) was 0.87 and large, the total air ratio was 1.32 and the concentration of CO was 61 ppm. On the other hand, in reference example 2 (RUN23), the primary air ratio (0.82) and the total air ratio (1.39) were substantially the same values as with reference example 1 (Run22), but the concentration of CO was reduced to 5.9 ppm. Reference example 1 (Run22) and reference example 2 (Run23) are greatly different from each other in the amount of sprayed water in the furnace.

It is considered from the dashed-line graph shown in FIG. 15 that when the total air ratio is 1.4, the concentration of CO can stably be kept to 10 ppm or lower. When considering the concentration of NOx in the case of the total air ratio of 1.4 from FIG. 13, in the case where the amount of sprayed water in the furnace was about 90 L/t of wastes, the concentration of NO could be about 30 ppm, and in the case where the amount of sprayed water in the furnace was about 190 L/t of wastes, the concentration of NOx could be reduced to 10 ppm or lower. Consequently, low-NOx (20 ppm or lower) and low-CO (10 ppm or lower) could easily be achieved.

The following has been confirmed from the results of the tests shown in FIGS. 12A and 12B:
1. When the total air ratio was in the range of about 1.18 to 1.51, the concentration of NOx decreased as the total air ratio decreased.
2. When the primary air ratio was in the range of about 0.47 to 0.68, the concentration of NOx was reduced by spraying water in the furnace together with secondary combustion air even though the total air ratio was the same. Further, as the amount of sprayed water increased, the concentration of NOx decreased. In the case where the total air ratio was 1.4, the concentration of NOx could be reduced to 30 ppm or lower when the amount of sprayed water in the furnace was 90 L/t of wastes, and the concentration of NOx could be reduced to 10 ppm or lower when the amount of sprayed water in the furnace was 190 L/t of the wastes.
3. When the total air ratio was in the range of 1.32 to 1.39 and water was sprayed in the furnace together with secondary combustion air, the concentration of NOx was about 60 ppm lower when the primary air ratio was in the range of 0.55 to 0.66 than when the primary air ratio was 0.82 and 0.87 even though the amount of sprayed water in the furnace was the same.

While the embodiments of the present invention have been described above, the present invention is not limited to the above embodiments, but may be reduced to practice in various different forms within the scope of the technical idea thereof. For example, although the number of secondary combustion air blowing nozzles and the number of water spray nozzles are the same in the embodiments, the number of secondary combustion air blowing nozzles and the number of water spray nozzles may be different from each other. Further, although the water spray nozzles are inserted in the secondary combustion air blowing nozzles, the secondary combustion air blowing nozzles and the water spray nozzles may be provided separately from each other insofar as secondary combustion air and water coexist in the secondary combustion site.

### Industrial Applicability

The present invention is applicable to a method for treating wastes and a waste incinerator for performing incineration treatment of wastes such as municipal wastes, shredder dust, and waste plastics.

### Reference Signs List

1, 11 fluidized bed incinerator
2, 12 furnace body
3, 13 fluidized bed
4, 14, 14A, 14B base plate
5, 15 incombustible discharge port
6, 16 exhaust port
7, 17 freeboard
8, 18 secondary combustion air blowing nozzle
9, 19 water spray nozzle
21a, 21b, 45 side wall
21S1, 21S2 slanted portion
22 moving-bed
23 fluidized-bed
24 partition plate
25, 26 air chamber
27 bottom plate
28, 38 furnace bed thermometer
31A, 31B, 32A, 32B, 35 air pipe
36 air blower
37, 47, 67, 87 supply chute
39, 59, 71, 84 furnace top thermometer
V1-1, V1-2, V2-1, V2-2, 51A, 51B, 51C regulating valve
41 stoker furnace
43 pusher
44, 44A, 44B, 44C, 64 fire grate group
46, 86 fire grate
48, 68, 88 secondary combustion air blowing nozzle
49, 69, 89 water spray nozzle
55 air supply pipe
57 combustion chamber
61 kiln
62 stoker furnace
63 secondary combustion chamber
65 primary combustion air blowing nozzle
66 fuel supply nozzle
72 kiln stoker furnace
81 gasification combustion furnace
82 primary furnace
83 secondary furnace
85 primary combustion air supply pipe

## Claims

1. A method for treating wastes by incinerating the wastes with a fluidized bed furnace (1, 11), comprising:
combusting part of wastes by supplying fluidizing air to a fluidized bed (3, 13) in the fluidized bed furnace (1, 11) at a primary air ratio ranging from 0.5 to 0.7 to generate a combustible gas and to maintain the temperature of the fluidized bed (3, 13) in the range of 550°C to 600°C; and
supplying secondary combustion air from secondary combustion air blowing nozzles (8) to the generated combustible gas and spraying water in the generated combustible gas to perform secondary combustion of the combustible gas in the presence of water, wherein
the water is sprayed into a freeboard (7, 17) together with the secondary combustion air from water spray nozzles (9) that are inserted in the respective secondary combustion air blowing nozzles (8) to lower the combustion temperature of a secondary combustion site in the freeboard (7, 17) in the fluidized bed furnace (1, 11) and to perform the secondary combustion of the combustible gas in the presence of water in the secondary combustion site in the freeboard (7, 17), and
an amount of sprayed water is 30 to 600 liters per ton in wet weight of wastes; and
the amount of sprayed water is determined from the amount of heat generated by the material to be incinerated and the total air ratio so that the temperature of a furnace top measured by a furnace top thermometer (39) provided in the freeboard (7, 17) will not become 850°C or lower.

2. The method for treating wastes according to claim 1, wherein according to a relationship between total air ratio and concentration of NOx, when the total air ratio increases by 0.2, the concentration of NOx increases by about 20 ppm, wherein such an increase by 20 ppm in the concentration of NOx is reduced by spraying water at a rate of about 100 liters per ton in wet weight of wastes.

## Patentansprüche

1. Verfahren zum Behandeln von Abfällen durch Verbrennen der Abfälle mit einem Wirbelbettofen (1, 11), welches Folgendes aufweist:
Verbrennen eines Teils der Abfälle durch Liefern von Fluidisierungsluft bzw. Wirbelluft zu einem Wirbelbett (3, 13) in dem Wirbelbettofen (1, 11) mit einem primären Luftverhältnis im Bereich von 0,5 bis 0,7 zur Erzeugung eines brennbaren Gases und zum Halten der Temperatur der Wirbelschicht bzw. des Wirbelbettes (3, 13) im Bereich von 550 °C bis 600 °C; und
Liefern von sekundärer Verbrennungsluft aus Blasdüsen (8) für sekundäre Verbrennungsluft zu dem erzeugten brennbaren Gas und Sprühen von Wasser in das erzeugte brennbare Gas, um eine sekundäre Verbrennung des brennbaren Gases in Anwesenheit von Wasser auszuführen, wobei das Wasser in einen Freiraum (7, 17) zusammen mit der sekundären Verbrennungsluft aus den Wassersprühdüsen (9) gesprüht wird, die in die jeweiligen Blasdüsen (8) für sekundäre Verbrennungsluft eingesetzt sind, um die Verbrennungstemperatur einer sekundären Verbrennungsstelle in dem Freiraum (7, 17) in dem Wirbelbettofen (1, 11) zu senken, und um die sekundäre Verbrennung des brennbaren Gases in Anwesenheit von Wasser an der sekundären Verbrennungsstelle in dem Freiraum (7, 17) auszuführen und
eine Menge des eingesprühten Wassers 30 bis 600 Liter pro Tonne des Nassgewichtes der Abfälle ist; und
die Menge des eingesprühten Wassers aus der Wärmemenge, die durch das zu verbrennende Material erzeugt wird, und dem Gesamtluftverhältnis bestimmt wird, so dass die Temperatur eines Oberteils des Ofens gemessen durch ein oberes Ofenthermometer (39), das in dem Freiraum (7, 17) vorgesehen ist, nicht 850 °C oder niedriger wird.

2. Verfahren zum Behandeln von Abfällen gemäß Anspruch 1, wobei, entsprechend einer Beziehung zwischen dem Gesamtluftverhältnis und einer Konzentration von NOx, wenn das Gesamtluftverhältnis um 0,2 zunimmt, die Konzentration von NOx um ungefähr 20 ppm zunimmt, wobei eine solche Zunahme um 20 ppm bei der Konzentration von NOx verringert wird durch Einsprühen von Wasser mit einer Rate von ungefähr 100 Litern pro Tonne Nassgewicht der Abfälle.

## Revendications

1. Procédé de traitement de déchets en incinérant les déchets avec un four à lit fluidisé (1, 11), comprenant :
faire brûler une partie des déchets en fournissant de l'air de fluidification à un lit fluidisé (3, 13) dans le four à lit fluidisé (1, 11) avec un premier taux d'air primaire compris entre 0,5 et 0,7 pour générer un gaz combustible et pour maintenir la température du lit fluidisé (3, 13) comprise entre 550 °C et 600 °C ; et
fournir de l'air de combustion secondaire à partir de buses de soufflage d'air de combustion secondaire (8) au gaz combustible généré et pulvériser de l'eau dans le gaz combustible généré pour réaliser une combustion secondaire du gaz combustible en présence d'eau, dans lequel
l'eau est vaporisée dans une hauteur libre (7, 17) conjointement avec l'air de combustion secondaire à partir de buses de pulvérisation d'eau (9) qui sont insérées dans les buses de soufflage d'air de combustion secondaire (8) respectives pour abaisser la température de combustion d'un site de combustion secondaire dans la hauteur libre (7, 17) dans le four à lit fluidisé (1, 11) et pour réaliser la combustion secondaire du gaz combustible en présence d'eau dans le site de combustion secondaire dans la hauteur libre (7, 17), et
la quantité d'eau pulvérisée est de 30 à 600 litres par tonne en poids humide de déchets ; et
la quantité d'eau pulvérisée est déterminée à partir de la quantité de chaleur générée par le matériau à incinérer et du taux d'air total de telle sorte que la température d'une partie haute du four mesurée par un thermomètre de haut du four (39) prévu dans la hauteur libre (7, 17) ne vienne pas à 850 °C ou moins.

2. Procédé de traitement de déchets selon la revendication 1, dans lequel selon une relation entre le taux d'air total et la concentration en NOx, lorsque le taux d'air total augmente de 0,2, la concentration de NOx augmente d'environ 20 ppm, dans lequel une telle augmentation de 20 ppm dans la concentration en NOx est réduite en pulvérisant de l'eau à un débit d'environ 100 litres par tonne en poids humide de déchets.
